# EUROPÄISCHE PATENTSCHRIFT

(11) **EP 3 688 304 B1**
(45) Veröffentlichungstag und Bekanntmachung des Hinweises auf die Patenterteilung: **19.10.2022**
(21) Anmeldenummer: 18769280.1
(22) Anmeldetag: 30.08.2018
(51) Int. Cl.: B63B 35/44, F03B 17/06

(54) **OSZILLIERENDER TRAGFLÄCHEN-GENERATOR/ANTRIEB ZUR UMWANDLUNG VON ENERGIE**
OSCILLATING HYDROFOILS-GENERATOR/DRIVE FOR CONVERTING ENERGY
GÉNÉRATEUR/DISPOSITIF D'ENTRAÎNEMENT DE SURFACES DE SUPPORT OSCILLANTES POUR LA CONVERSION D'ÉNERGIE

(30) Priorität: 27.09.2017 DE 102017009045
(43) Veröffentlichungstag der Anmeldung: 05.08.2020
(73) Patentinhaber: Technische Universität Hamburg, 21073 Hamburg (DE)
(72) Erfinder: ABDEL-MAKSOUD, Moustafa, 21149 Hamburg (DE); LOEBUS, Svenja, 21107 Hamburg (DE)
(74) Vertreter: Lelgemann, Karl-Heinz
(86) Internationale Anmeldenummer: PCT/EP2018/000420
(87) Internationale Veröffentlichungsnummer: WO 2019/063120

(56) Entgegenhaltungen:
- EP-A2- 2 469 073
- WO-A1-2008/144938
- WO-A1-2017/021867
- SK-U1- 632 016
- US-A- 4 470 770

## Beschreibung

Die vorliegende Erfindung betrifft eine Vorrichtung, die sowohl als Antriebssystem als auch zur Energiegewinnung eingesetzt werden kann.

Die vorliegende Erfindung betrifft eine Strömungsmaschine zur Energieübertragung zwischen einem strömenden Fluid und einer Ab- bzw. Antriebswelle, an der ein Motor angeordnet ist, der ebenfalls als Generator einsetzbar ist, wobei die Strömungsmaschine eine Tragflügelanordnung von vier oszillierenden Tragflügeln umfasst, die sich in dem strömenden Fluid befinden, jeweils zwei parallel und in Reihe ausgerichtet. Die Strömungsmaschine umfasst außerdem zwei Rahmenkonstruktionen, rotationsbeweglich auf einer Welle gelagert, die für eine rotationsbewegliche Lagerung der Tragflügel um eine quer zur Strömungsrichtung ausgerichtete Drehachse ausgebildet sind. Die Strömungsmaschine umfasst außerdem eine Anordnung, die für eine Umsetzung der gegenläufigen oszillierenden Rotationsbewegungen der beiden Rahmenkonstruktionen in eine unidirektionale lineare Rotationsbewegung ausgebildet ist. Erfindungsgemäß kann die Strömungsmaschine, bei einer Befestigung an Schiffen oder Offshore-Strukturen, als Antriebsorgan dienen, bei einer Kombination mit einem Schwimmkörper als Schleppeinrichtung vor einem Schiff fungieren, mit einer anderen Antriebseinrichtung als Energiegewinnung dienen oder durch eine stationäre Vorrichtung für eine Verankerung ausschließlich zur Energiegewinnung eingesetzt werden.

Die vorliegende Erfindung betrifft eine Strömungsmaschine zur Energieübertragung zwischen einem strömenden Fluid und einer Ab- bzw. Antriebswelle. Die Strömungsmaschine verfügt über vier oszillierende Tragflügel. Erfindungsgemäß bewegen sich diese Tragflügel periodisch durch den durch Fluidströmung bedingten Auf- bzw. Abtrieb nach oben bzw. nach unten, wobei durch die sinusförmige Stampfbewegung an den Drehachsen der Tragflügel die Hubbewegungsrichtung dieser verändert wird. Jeweils zwei diagonal zueinander sich befindende Tragflügel sind durch eine Rahmenkonstruktion miteinander verbunden. An den quer zur Strömungsrichtung ausgerichteten Drehachsen der Rahmenkonstruktionen wird die sinusförmige Rotationsbewegung der Rahmenkonstruktionen verändert und der maximale Hubweg der Tragflügel bestimmt. Die Drehachsen der Rahmenkonstruktionen sind mit einer Anordnung verbunden, die für eine Umsetzung der gegenläufigen oszillierenden Rotationsbewegungen der Rahmenkonstruktionen in eine unidirektionale lineare Rotationsbewegung ausgebildet ist.

Der Einsatz von hydrokinetischen Turbinen zur Umwandlung der Strömungsenergie eines Fluides in elektrische oder mechanische Energie nimmt im Bereich der erneuerbaren Energien stetig zu. Bei einer ortsfesten Installation nutzt diese Technik die hohe Energiedichte von Wasserströmung, ist sowohl für Tiden- als auch Flussströmung anwendbar und hat im Vergleich zu anderen Energieträgern geringe Auswirkungen auf Menschen, Tiere und Umwelt. Es ist nachgewiesen, dass die Effizienz dieser Art von Turbine mit jener von rotierenden Turbinen vergleichbar ist. Bei gleicher Leistung wird ein kleinerer und flacherer Bereich des Strömungsfeldes beansprucht. Des Weiteren ist es vorteilhaft, wenn zusätzlich die hydrokinetisehe Turbine an Schiffen und schwimmenden Strukturen angebracht werden und sowohl als Antrieb bzw. als Schleppkörper dienen kann als auch bei einer anderen Antriebseinrichtung, wie z.B. Segel, die Energie des strömenden Fluides in mechanische oder elektrische Energie umwandelt.

Die aus Patent CN 204253265 U bekannte Lösung zeigt eine Möglichkeit der Installation einer Strömungsmaschine zur Umwandlung von kinetischer Energie einer Fluidströmung in mechanische Energie mit mindestens einem oszillierenden Tragflügel. Die Hubbewegung von zwei in Bezug auf die Strömungsrichtung in Reihe angeordneten Tragflügeln wird in eine unidirektionale rotierende Bewegung mittels vier verbundenen Mechanismen, bestehend aus Kraftübertragungselementen in Form von Riemen und Kurbelgetriebe, umgesetzt. Die Rahmenkonstruktion, an welcher die Flügelprofile befestigt sind, wird starr mit der Umgebung verankert. Ein Nutzen der Strömungsmaschine als Antrieb ist nicht vorgesehen.

Patent WO 2012/040834 A1 zeigt eine weitere Möglichkeit der Installation einer Strömungsmaschine mit oszillierenden Tragflügeln. Die Methode umfasst eine Turbine bestehend aus zwei in Bezug auf die Strömungsrichtung in Reihe angeordneten Tragflügeln, wobei jeder Tragflügel eine lineare Hubbewegung und um die Querachse Stampfbewegungen ausführen kann. Die Hubbewegung des ersten Tragflügels ist dabei mit der Stampfbewegung des zweiten Tragflügels verbunden und entsprechend die Hubbewegung des zweiten Tragflügels mit der Stampfbewegung des ersten Tragflügels. Die Hubbewegung der Tragflügel wird über eine Kurbelwelle in unidirektionale Rotationsbewegung einer Welle umgesetzt.

Die aus Patent CN 105065182 A bekannte Lösung zeigt die Möglichkeit der Umsetzung einer schwimmenden Strömungsmaschine zur Umwandlung von kinetischer Energie einer Fluidströmung in mechanische oder elektrische Energie. Die Strömungsmaschine umfasst eine Tragflügelanordnung mit zwei nebeneinander ausgerichteten Tragflügeln. Die Energieübertragung wird über eine Verbindung der Stampfbewegung der Tragflügel mit Kurbelwellen realisiert. Die Steuerung der Stampfbewegung der Tragflügel erfolgt über ein Kraftübertragungselement in Form eines Riemens.

Außerdem sind der Antragsstellerin/dem Antragssteller folgende Patente bekannt:
WO 2017/021867 A1; WO 2016/072603 A1; US 2015/0091305 A1; WO 2014/017859 A1; DE 10 2014 003 752 A1; US 2012/0235417 A1; WO 2008/144938 A1; US 2011/0031754 A1; US 2007/0297903 A1.

Strömungsmaschinen zur Energiegewinnung mit vier, durch Rahmenkonstruktionsarme verbundenen, oszillierenden Tragflügeln sind außerdem aus US 4 470 770, EP 2 469 073 und WO 2008/144938 bekannt. Die aus dem Stand der Technik bekannten fest installierten Strömungskraftwerke sind aufgrund ihrer starren Befestigung am Flussbett oder Meeresgrund in ihrer Installation und Wartung aufwendig und teuer. Des Weiteren sind sie unflexibel hinsichtlich der Anpassung an ihre Installationsumgebung (zum Beispiel Fluss, Brückenpfeiler). Eine Anpassung an den variierenden Wasserstand, welche u. a. in Flüssen, bei Gezeiten oder Tiefgangsänderungen von Schiffen notwendig ist, ist nicht gegeben. Zwar trägt die im Patent CN 105065182 A beschriebene Lösung einer schwimmenden Strömungsmaschine zur Umwandlung von kinetischer Energie einer Fluidströmung in mechanische oder elektrische Energie dem Rechnung, aber der Einsatz der Strömungsmaschine als Schiffsantrieb ist nicht vorgesehen.

Des Weiteren ist es vorteilhaft, die rechteckige Extraktionsfläche der Strömungsmaschine optimal auszunutzen und damit deren Effizienz zu steigern. Eine Lösung wird bereits im Patent WO 2017/021867 A1 vorgestellt, welches eine Strömungsmaschine zur Umwandlung von Strömungsenergie mit vier Tragflügeln und einer Rahmenvorrichtung beschreibt. Ferner sind die Flügel mit einer Stampfeinrichtung verbunden. Eine Variation der Hublänge und eine variable Verankerung oder der Einsatz als Schiffsantrieb sind jedoch nicht vorgesehen.

Die Aufgabe der vorliegenden Erfindung besteht darin, eine Strömungsmaschine bereitzustellen, die sowohl als Schiffsantrieb als auch als Anlage zur Energiegewinnung aus dem strömenden Medium gestaltet und mit einem Motor verbunden ist, der auch als Generator dienen kann. Die Strömungsmaschine soll einen verbesserten Wirkungsgrad aufweisen, kostengünstiger, einfacher und robuster in ihrem Aufbau, sowie flexibler bzw. variabler in ihrer Installation, Wartung und Anwendung sein.

Zur Lösung dieser Aufgabe wird eine Strömungsmaschine zur Energieübertragung zwischen einem strömenden Fluid und einer Ab- bzw. Antriebswelle, an der ein Motor-Generator angebracht ist, vorgeschlagen, wobei die Strömungsmaschine vier oszillierende Tragflügel aufweist, die an zwei rechteckigen Rahmenkonstruktionen an ihren jeweiligen Drehachsen drehbar mit entsprechenden technischen Mitteln gelagert sind. Die Rahmenkonstruktionen sind über eine weitere Drehachse mit entsprechenden technischen Mitteln gelagert, wobei sie durch eine Kraftübertragungseinrichtung mit der Ab- bzw. Antriebswelle in Verbindung stehen. Die Kraftübertragungseinrichtung ist mit entsprechenden Mitteln mit einer Einrichtung zur Befestigung an bzw. Verbindung zu Schiffen bzw. Offshore-Strukturen ausgestattet.

Die Erfindung soll als Antrieb für schwimmende Strukturen verwendet werden. Hierfür wird die oszillierende Bewegung der Profile so angepasst, dass die zugeführte mechanische Leistung in axiale Kraft umgewandelt wird. Der Schub ist nach Bedarf vor- oder rückwärts gerichtet. Damit ähnelt ihre Funktion der eines Propellers. Diese Vorrichtung ist besonders für Mehrrumpfschiffe vorteilhaft, da sie zwischen den Rümpfen platzsparend angebracht werden kann und Vor- oder Rückwärtsschub erlaubt. Die Drehachse liegt ebenfalls horizontal und quer zu Fahrtrichtung, wie oben beschrieben.

Während der Fahrt eines des mit der Strömungsmaschine ausgestatteten Schiffes kann erfindungsgemäß mit einer anderen Antriebseinrichtung wie z.B. Segel oder bei ankerndem Schiff in strömendem Fluid die Strömungsmaschine der Energiegewinnung dienen. Diese Energie kann unmittelbar verwendet oder in geeigneter Form gespeichert werden.

Erfindungsgemäß kann die Strömungsmaschine mit einem Schwimmkörper versehen werden, der sie befähigt, als Schleppeinrichtung vor einem Schiff zu fungieren. Die hierfür benötigte elektrische Energie wird vom Schiff durch eine entsprechende Verbindung auf die Strömungsmaschine übertragen. Über diese Verbindung erfolgt auch die Kurssteuerung der Strömungsmaschine.

Erfindungsgemäß kann die Strömungsmaschine zur Energiegewinnung mit einem Schwimmkörper versehen werden, der sie befähigt, hinter dem Schiff geschleppt zu werden. Die während des Schleppvorgangs generierte elektrische Energie wird zum Schiff durch eine entsprechende Verbindung übertragen. Über diese Verbindung erfolgt auch die Kurssteuerung der Strömungsmaschine.

Erfindungsgemäß kann die Strömungsmaschine in vertikaler Richtung verschiebbar an ein Schiff angebracht werden. Damit können die vertikale Position der gesamten Anlage wie auch der Hubweg der Flügel dem jeweiligen Tiefgang des Schiffes angepasst werden, um die Strömungsenergie optimal auszunutzen. Sofern die Strömungsmaschine zum Antreiben des Schiffes bzw. zur Energiegewinnung nicht benötigt wird, kann sie über der Wasseroberfläche positioniert werden.

Erfindungsgemäß kann die Strömungsmaschine ausschließlich zur Energiegewinnung eingesetzt werden, indem sie an im Wasser installierten Strukturen wie Brückenpfeiler angebracht oder schwimmend ausgelegt wird, wobei eine Vorrichtung für eine Verankerung an der Umgebung oder Befestigungen vorgesehen ist.

Die oszillierenden Stampf- und Hubbewegungen der vier Tragflügel erfolgen sinusförmig, wobei:
- die Tragflügel eine sinusförmige Stampfbewegung um ihre jeweilige Querachse ausführen,
- die Drehachsen von jeweils zwei Tragflügeln durch zwei Rahmenkonstruktionsarme verbunden und in Strömungsrichtung diagonal hintereinander angeordnet sind,
- die Stampfbewegung der Tragflügel um ihre jeweilige Querachse sowohl passiv als auch bei einer mit entsprechenden technischen Mitteln ausgestatteten Einrichtung aktiv erfolgen kann,
- die Drehachsen der Rahmenkonstruktionen auf einer Welle gelagert und miteinander verbunden sind,
- die Stampfbewegung der jeweils übereinander liegenden Tragflügel um ca. 180 Grad phasenversetzt ist,
- die Hubbewegung der jeweils übereinander liegenden Tragflügel um ca. 180 Grad phasenversetzt ist,
- die Hubbewegung der Tragflügel über die Rahmenkonstruktionen in eine oszillierende Rotationsbewegung umgesetzt wird,
- die Position der Drehachse der Rahmenkonstruktionen der Strömungsumgebung angepasst wird. Die Position der Drehachse bestimmt die relative Größe des Hubwegs der Tragflügel.

Durch die vorteilhafte Anordnung beider Rahmenkonstruktionen wird die Strömungsmaschine robuster und einfacher im Aufbau.

Insbesondere durch die Ausbildung der Tragflügelprofile mit entsprechendem Material wird die Strömungsmaschine mit geringem Gewicht und leichtem Auftrieb ausgebildet. Damit wird eine Strömungsmaschine mit flexibler, einfacher und kostengünstiger Installations- und Wartungsmöglichkeit zur Verfügung gestellt.

Vorteilhafte Weiterentwicklungen und Merkmale der Erfindung sind Gegenstand der Unteransprüche.

So ist insbesondere vorgesehen, dass die Kraftübertragungseinrichtung der Strömungsmaschine eine Bereitstellung einer unidirektionalen Rotationsbewegung an die Antriebswelle gewährleistet bzw. die Aufgabe einer Umsetzung der Rotationsbewegung der Antriebswelle des elektrischen Motors in oszillierende Rotationsbewegungen der beiden Rahmenkonstruktionen erfüllt. Um eine Umsetzung der mechanischen Energie in Schub bzw. die Umsetzung der Strömungsenergie mit einem hohen Wirkungsgrad zu gewährleisten, ist es vorteilhaft, wenn die Antriebs- bzw. Abtriebswelle unidirektional betrieben werden kann. Die Kraftübertragungseinrichtung ist durch geeignete technische Mittel entsprechend ausgebildet. Es ist vorteilhaft, wenn Bewegungen der beiden Rahmenkonstruktionen gekoppelt sind und die Antriebswelle die Drehmomente auf die Rahmenkonstruktionen überträgt, um deren oszillierende Rotation zu bewirken.

Exemplarisch kann die Kraftübertragungseinrichtung eine Getriebeanordnung aus einer Kombination aus Pleuelstangen, Kurbelwellen und Getriebe umfassen. Dabei sind die Rahmenkonstruktionen auf einer gemeinsamen Welle drehbar gelagert. Besonders vorteilhaft ist es, wenn alle vier Rahmenkonstruktionsarme längs zur Strömungsrichtung mit jeweils einer Pleuelstange durch entsprechende technische Mittel drehbar verbunden sind. Vor allem ist vorgesehen, dass mit einem Getriebe die unidirektionale Rotation der Antriebs- bzw. Abtriebswelle die gegenläufigen Rotationsbewegungen der mit Pleuelstangen verbundenen Kurbelwellen umgesetzt wird. Die Länge des Hubweges der Tragflügel wird über die Länge der Pleuelstangen und die Befestigungsposition an den Rahmenkonstruktionsarmen festgelegt.

Exemplarisch kann die Kraftübertragungseinrichtung auch eine Getriebeanordnung aus einer Kombination von Kraftübertragungselementen in Form von Kegelrädern und Stirnrädern oder Riemen umfassen. Zweckmäßig ist es, wenn die gegenläufigen oszillierenden Rotationsbewegungen der Rahmenstrukturarme über ein Kegelradgetriebe miteinander gekoppelt und mit Kraftübertragungselementen wie Stirnrädern oder ringförmig umlaufenden Zugmitteln in Form von Riemen mit der Antriebs- bzw. Abtriebswelle verbunden werden.

Die Erfindung bietet die Möglichkeit, an den Endpunkten der Rotationswege, d. h. an den Drehachsen der Tragflügel und an den Drehachsen der Rahmenkonstruktionen, elastische Energiespeicher in Form von Federn anzubringen. Bei einer Kraftübertragungseinrichtung ist die Kopplung mit der Antriebs- bzw. Abtriebswelle über Freiläufe vorgesehen um eine oszillierende Rotation der Rahmenkonstruktionsarme sicher zu stellen.

Exemplarisch kann die Kraftübertragungseinrichtung auch ein hydraulisches System umfassen. Dabei sind die Rahmenkonstruktionen auf einer gemeinsamen Welle drehbar gelagert. Besonders vorteilhaft ist es, wenn alle vier Rahmenkonstruktionsarme längs zur Strömungsrichtung mit jeweils einer Kolbenstange durch entsprechende technische Mittel drehbar verbunden sind. Das mithilfe einer Pumpe verdichtete Fluid bewirkt die Bewegung von in Zylindern befindlichen Kolben, an denen die Kolbenstangen befestigt sind.

Es ist vorteilhaft, die Antriebs- bzw. Abtriebswelle mit einem Energiespeicher in Form eines Schwungrades zu verbinden, um Schwingungen auszugleichen und den oberen sowie unteren Totpunkt der sinusförmigen Rotation der Rahmenkonstruktionsarme ruckelfrei zu überwinden.

Zweckmäßig ist es, wenn eine Befestigungs- bzw. Verbindungseinrichtung der Strömungsmaschine derart ausgebildet ist, dass sie der vorhandenen Umgebung hinsichtlich Wassertiefe und Strömungsrichtung angepasst bzw. an ein Schiff oder Offshore-Strukturen installiert werden kann. Die Befestigungs- bzw. Verbindungseinrichtung erfüllt die Aufgabe, die Strömungsmaschine an geeigneter Position in der Fluidströmung zu halten. Vorteilhaft ist es, wenn die Befestigungs- bzw. Verbindungseinrichtung mit geeigneten technischen Mitteln die Änderung der vertikalen Position der Strömungsmaschine, zum Beispiel für Wartungszwecke oder zur Anpassung an den Tiefgang des Schiffes zulässt. Eine Positioniermöglichkeit der Strömungsmaschine über der Wasseroberfläche ist vorgesehen, um bei Nichtbenutzung den Widerstand des Schiffs zu verringern oder Instandhaltungsarbeiten zu erleichtern.

Exemplarisch kann bei einer vorteilhaften Weiterbildung der Erfindung die Strömungsmaschine als Schleppkörper gestaltet werden, welcher vor oder hinter dem Schiff eingesetzt werden kann. Vor dem Schiff dient die Strömungsmaschine als Antrieb, der mit elektrischer Leistung versorgt wird, hinter dem Schiff als Energiegewinnungseinrichtung, die elektrische Leistung liefert. Die Strömungseinrichtung wird mit einem Schwimmkörper, der aus einem oder mehreren Teilen besteht, sowie mit einer Rudereinrichtung, die Kurssteuerung ermöglicht, ausgestattet. Die Verbindung zwischen Schleppkörper und Schiff kann mithilfe von Leinen und Kabeln beliebiger Länge erfolgen.

Bei einer Weiterbildung der Erfindung ist bei Mehrrumpfschiffen vorgesehen, dass die Strömungsmaschine zwischen den Rümpfen angebracht wird, wobei im tiefen Wasser ihre Position unterhalb der Kiellinien liegt. Dadurch wird der Einfluss des Seegangs vermindert.

Bei einer vorteilhaften Weiterbildung der Erfindung ist bei Trimaranen vorgesehen, zwei Strömungsmaschinen in der Funktion sowohl als Antriebsmotor als auch als Generator zwischen den Rümpfen anzubringen. Dies hat den Vorteil, das durch eine Strömungsmaschine entstehende Giermoment zu minimieren. Durch Variation der Drehzahl des Antriebsmotors kann die Manövrierbarkeit des Schiffes erhöht werden.

Die Steuerung zwischen Energiegewinnungs- und Antriebsmodus ist mechanisch, elektrisch oder hydraulisch realisierbar. Die Aktuatoren werden in den Flügeln bzw. in den Rahmenkonstruktionsarmen angebracht. Die Steuerung sorgt für eine optimale Energieübertragung.

Exemplarisch kann bei einer vorteilhaften Weiterbildung der Erfindung bei Einsatz ausschließlich zur Energiegewinnung die Verankerungseinrichtung Festmacherleinen umfassen, die mit der Kraftübertragungseinrichtung verbunden sind. Bei einer vorteilhaften Weiterbildung der Verankerungseinrichtung ist vorgesehen, dass die Festmacherleinen durch eine Winde mit der Kraftübertragungseinrichtung verbunden sind, die mit entsprechenden technischen Mitteln gesteuert werden kann. So kann die Verankerungshöhe der Strömungsmaschine beispielsweise dem Wasserstand, für Wartungszwecke oder Schiffsverkehr angepasst werden.

Beispielhaft werden vorteilhafte Ausführungsformen der Erfindung anhand der Zeichnung erläutert. Hierbei zeigen:
Fig. 1a und 1b zwei perspektivische Darstellungen der Strömungsmaschine mit einer exemplarischen Ausführungsform der Kraftübertragungseinrichtung.
Fig. 2a und 2b zwei perspektivische Darstellungen der Strömungsmaschine mit einer exemplarischen Ausführungsform der Anbringung an einem Katamaran und einer exemplarischen Ausführungsform der Kraftübertragungseinrichtung.
Fig. 3a und 3b zwei perspektivische Darstellungen der Strömungsmaschine mit einer exemplarischen Ausführungsform der Verankerungs-/Befestigungseinrichtung und einer exemplarischen Ausführungsform der Kraftübertragungseinrichtung.

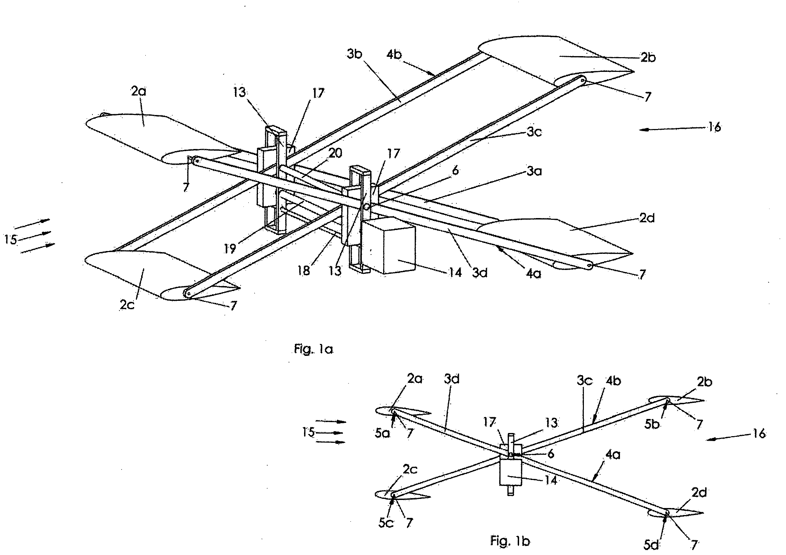

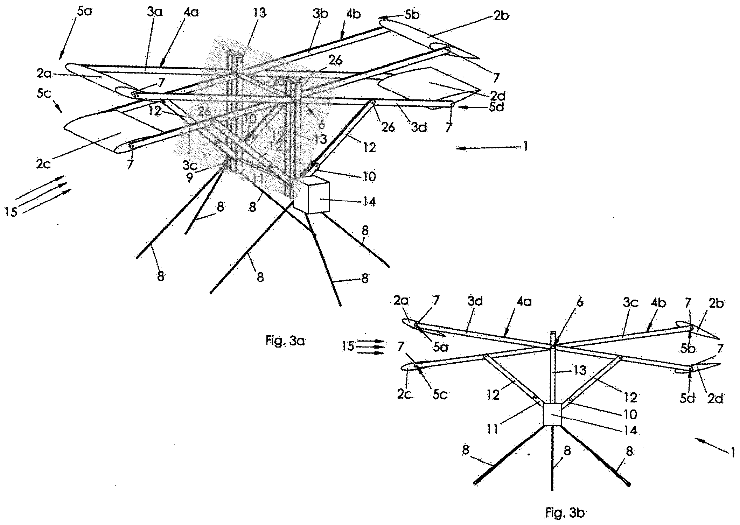

Eine in den Fig. 1 bis Fig. 3 dargestellte Strömungsmaschine 16, 23, 1 weist eine Tragflügelanordnung auf, die vier Tragflügel 2a-d umfasst. In Fig. 3 sind die Drehachsen 5a,c zweier Tragflügel 2a,c stromaufwärts zueinander parallel übereinander und die Drehachsen 5b,d zweier Tragflügel 2b,d stromabwärts parallel übereinander ausgerichtet, mit den Drehachsen 5a-d quer zur Strömungsrichtung gerichtet. Die Strömungsrichtung des Fluides ist durch die Pfeile 15 gekennzeichnet. Exemplarisch sind die Tragflügel 2a-d längs der jeweiligen Drehachse 5a-d mit strömungsgünstigen Profilformen versehen und weisen somit in der Querschnittebene normal zu den Drehachsen 5a-d strömungsgünstige Querschnitte auf.

Die in den Fig. 1 bis Fig. 3 dargestellten Rahmenkonstruktionen 4a,b bestehen aus jeweils zwei im Abstand liegenden Rahmenkonstruktionsarmen 3a-d, die in einer Drehachse 6 drehbar gelagert und an einer exemplarisch dargestellten Rahmenkonstruktionshalterung 13 drehbar befestigt sind.

Die Tragflügel 2a-d sind drehbar um ihre Drehachsen 5a-d an den Enden der Rahmenkonstruktionsarme 3a-d gelagert.

Die Drehachsen 5a-d der Tragflügel 2a-d haben zur Drehachse 6 der Rahmenkonstruktionen 4a,b einen räumlichen Abstand.

Durch die Stampfbewegung der Tragflügel 2a-d um die jeweilige Drehachse 5a-d ergibt sich bezogen auf die Fluidströmung 15 ein Anstellwinkel für jeden Tragflügel 2a-d. Der Anstellwinkel der Tragflügel 2a-d verändert sich bei jeder Auf- und Abbewegung, um eine günstige Zuströmungsrichtung hinsichtlich der durch die Fluidströmung 15 erzeugten hydrodynamischen Kräfte auf die Tragflügel 2a-d zu realisieren. Durch die Hubbewegung der Tragflügel 2a-d bzw. durch die Rotation der Antriebswelle 19 entsteht ein Drehmoment auf die Rahmenkonstruktionen 4a,b woraus die oszillierende Rotationsbewegung der Rahmenkonstruktionsarme 3a-d in ihrer Drehachse 6 resultiert. An den Wendepunkten der oszillierenden Stampfbewegung der Tragflügel 2a-d passiert sowohl die Bewegung der Tragflügel 2a-d als auch die Bewegung der Rahmenkonstruktionen 4a,b einen Totpunkt. Bei der Tragflügelstellung, wie sie exemplarisch in Fig. 3 dargestellt ist, ergibt sich bei der Fluidströmung 15 eine Auftriebskraft für die beiden oberen Tragflügel 2a,b sowie eine Abtriebskraft für die beiden unteren Tragflügel 2c,d. Dementsprechend führen die oberen Tragflügel 2a,b eine Bewegung aus, die gemäß der Darstellung in Fig. 3 in vertikaler Richtung nach oben gerichtet ist, während die unteren Tragflügel 2c,d eine Bewegung ausfuhren, die gemäß Fig. 3 in vertikaler Richtung nach unten gerichtet ist.

Eine vorteilhafte Anpassung an die Fluidströmung 15 kann eine Verlegung der Drehachse 6 der Rahmenkonstruktionen in den vorderen Bereich der Rahmenkonstruktionsarme 3a-d sein, wie exemplarisch in Fig. 1 dargestellt. Damit erfahren die hinteren Tragflügel 2b,d einen größeren Hubweg als die vorderen Tragflügel 2a,c und die Extraktionsfläche wird vertikal zur Fluidströmungsrichtung 15 vergrößert.

Eine weitere vorteilhafte Anpassung an die Fluidströmung 15 kann eine aktive Steuerung der Stampfbewegung der Tragflügel 2a-d beinhalten. Mit entsprechenden technischen Mitteln können Steuerungselemente in den Tragflügeln 2a-d oder an deren Drehpunkten 7 an den Rahmenkonstruktionen installiert und mit Steuerungselementen an der Rahmenkonstruktionshalterung 13 verbunden werden (nicht dargestellt).

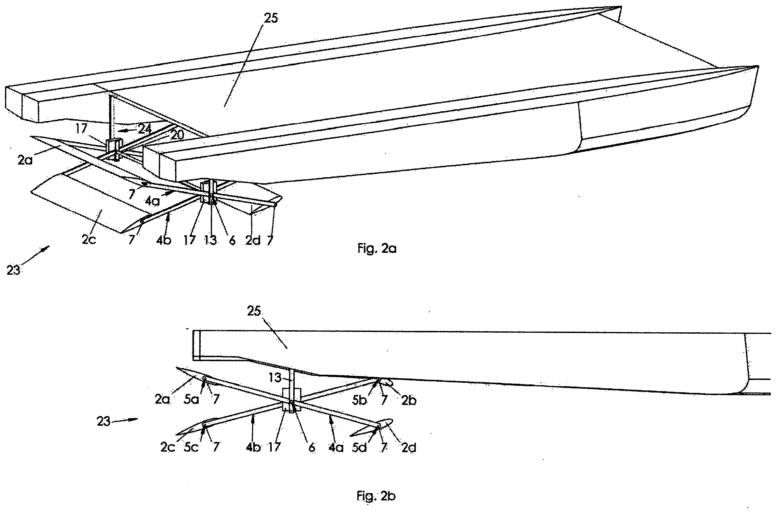

Um aus der gegenläufigen Hubbewegung der Tragflügel 2a-d und der damit zwangsläufig verbundenen oszillierenden Rotationsbewegung der Rahmenkonstruktionen 4a,b eine unidirektionale Rotationsbewegung der Abtriebswelle 19 bzw. um aus der unidirektionalen Rotationsbewegung der Antriebswelle 19 eine oszillierende Rotationsbewegung der Rahmenkonstruktionen 4a,b abzuleiten, sind im Folgenden vorteilhafte Ausbildungen in Fig. 1-3 beschrieben:
Exemplarisch umfasst in einer ersten Ausführung der Strömungsmaschine 16, 23 in Fig. 1, 2 die Kraftübertragungseinrichtung 17 eine Getriebeanordnung aus einer Kombination von Kraftübertragungselementen in Form von ringförmig umlaufenden Zugmitteln oder Stirnrädern und Kegelrädern (nicht genauer dargestellt). Dabei werden die gegenläufigen oszillierenden Rotationsbewegungen der Rahmenkonstruktionsarme 3a-d über ein Kegelradgetriebe miteinander gekoppelt. Dadurch wird eine Nutzung bzw. Drehmomentenweitergabe sowohl der Abtriebs- als auch Auftriebsbewegungen der Tragflügel 2a-d sichergestellt. Die Übertragung der oszillierenden Bewegung der Welle 20, auf der die Rahmenkonstruktionsarme 3a-d gelagert sind, auf die Antriebs- bzw. Abtriebswelle 19 (dargestellt in Fig. 1) erfolgt über Stirnräder (nicht dargestellt) oder ringförmig umlaufende Zugmittel in Form von Riemen 24 in Fig. 2.

Exemplarisch umfasst in einer zweiten Ausführung der Strömungsmaschine 1 in Fig. 3 die Kraftübertragungseinrichtung eine Getriebeanordnung aus einer Kombination aus Pleuelstangen 12, Kurbelwellen 10, 11 und Getriebe (nicht dargestellt). Dabei sind die Rahmenkonstruktionen 4a,b auf einer gemeinsamen Welle 20 drehbar gelagert, siehe Fig. 3a. Jeder der vier Rahmenkonstruktionsarme 3a-d ist längs zur Strömungsrichtung 15 mit jeweils einer Pleuelstange 12 durch entsprechende technische Mittel in einem Drehpunkt 26 drehbar verbunden. Die gegenläufige Rotationsbewegung der mit den Pleuelstangen 12 verbundenen Kurbelwellen 10,11 kann mit einem Zahnradgetriebe (nicht dargestellt) in eine unidirektionale Rotation umgesetzt werden. Die Länge des Hubweges der Tragflügel 2a-d wird über die Länge der Pleuelstangen 12 sowie die Position der Drehpunkte 26 auf den Rahmenkonstruktionen 4a,b festgelegt. Die Kurbelwellen 10,11 werden mit der Ab- bzw. Antriebswelle 19 (in Fig. 3 nicht dargestellt), die mit einem Generator/Motor 14 verbunden ist, mit einem Getriebe (nicht dargestellt) mit geeigneter Übersetzung gekoppelt.

Bei der Ausführung der Erfindung als Kraftübertragungseinrichtung zur Energiegewinnung bzw. als Antrieb in Fig. 1-3 ist es sinnvoll, an den Endpunkten der Rotationswege, d.h. an den Drehachsen der Tragflügel 5a-d und an den Drehachsen der Rahmenkonstruktionen 6 elastische Energiespeicher in Form von Federn anzubringen. Bei einer Kraftübertragungseinrichtung ist die Kopplung mit der Antriebs- bzw. Abtriebswelle 19 über Freiläufe (nicht dargestellt) vorgesehen, um eine oszillierende Rotation der Rahmenkonstruktionsarme sicher zu stellen.

Vorteilhaft ist zusätzlich eine Verbindung der Antriebs- bzw. Abtriebswelle 19 mit einem Energiespeicher in Form eines Schwungrades (nicht dargestellt), das Schwingungen ausgleicht und den oberen sowie unteren Totpunkt der oszillierenden Rotation der Rahmenkonstruktionsarme 4a,b ruckelfrei überwindet.

Erfindungsgemäß ist eine Verankerung/Befestigung der Strömungsmaschine entsprechend der Einsatzumgebung eingerichtet:
Die Anbringung der Strömungsmaschine 23 als Generator und/oder Motor an einem Schiff, hier exemplarisch ein Katamaran 25, ist in Fig. 2 dargestellt. Die Strömungsmaschine kann vorteilhaft zwischen den Rümpfen eines Katamarans 25 befestigt werden und die Rotation der Rahmenkonstruktionen 4a,b kann zum Beispiel mit ringförmig umlaufenden Zugmitteln in Form von Riemen 24 an den sich über Deck befindlichen Generator/Motor (nicht dargestellt) übertragen werden. Die Strömungsmaschine 23 kann in dieser Konfiguration in vertikaler Richtung fahrbar angebracht werden, sodass sie sich bei Nichtbenutzung über der Wasseroberfläche befindet. Durch geeignete Steuerung der Tragflügel 2a-d ist es ebenfalls möglich, Rückwärtsschub zu erzeugen.

Exemplarisch für den Einsatz in Meeres- oder Flussströmung kann eine Verankerung mit dem Meeresgrund oder Flussbett vorteilhaft sein. Wie schematisch aus Fig. 3 entnommen werden kann, sind die Rahmenkonstruktionshalterungen 13 der Strömungsmaschine 1 starr über Winden 9 mit jeweils mindestens einer Festmacherleine 8 verbunden. Die Verankerung verhindert ein Abtreiben und Wegdrehen aus der Strömung.

Auf Grund der freien Einstellbarkeit der Länge der Festmacherleinen 8 durch die Winden 9 ist eine vorteilhafte Anpassung der Strömungsmaschine an den sich ändernden Wasserstand möglich, wodurch die Energieübertragung der kinetischen Fluidströmungsenergie verbessert wird. Darüber hinaus kann die Länge der Festmacherleinen 8 für Installation, Wartungszwecke oder Schifffahrtsbetrieb variabel angepasst werden. Exemplarisch in Fig. 2 dargestellt ist auch eine horizontale Befestigung der Festmacherleinen 8 der Strömungsmaschine 16 an Offshorestrukturen oder anderen im Wasser befindlichen Bauwerken, wie zum Beispiel Brückenpfeiler, möglich.

### Bezugszeichenliste

1 Exemplarische Ausführungsform der Strömungsmaschine
2 Tragflügel a-d
3 Rahmenkonstruktionsarme a-d
4 Rahmenkonstruktion a,b
5 Drehachse der Tragflügel a-d
6 Drehachse der Rahmenkonstruktionen
7 Drehpunkte der Tragflügel an den Rahmenkonstruktionen
8 Festmacherleinen
9 Winden
10 Kurbelwelle
11 Kurbelwelle
12 Pleuelstangen
13 Rahmenkonstruktionshalterung
14 Generator/Motor
15 Fluidströmungsrichtung
16 Exemplarische Ausführungsform der Strömungsmaschine
17 Kraftübertragungseinrichtung
18 Welle
19 Ab-/Antriebswelle
20 Welle
23 Exemplarische Ausführungsform der Strömungsmaschine
24 Riemen
25 Katamaran
26 Pleueldrehpunkte an Rahmenkonstruktion

## Patentansprüche

1. Strömungsmaschine zur Energieübertragung zwischen einem strömenden Fluid und einer Antriebs- bzw. Abtriebswelle (19), an der ein Motor oder Generator (14) angeordnet ist und die sowohl als Antriebssystem als auch zur Energiegewinnung einsetzbar ist, **dadurch gekennzeichnet, dass** sie einen ersten, zweiten, dritten und vierten oszillierenden Tragflügel (2a, 2b, 2c, 2d), die oszillierende Stampfbewegungen um ihre Querachse ausführen, wobei die Drehachsen (5a, 5d; 5b, 5c) von jeweils zwei Tragflügeln (2a, 2d; 2b, 2c) durch zwei Rahmenkonstruktionsarme (3a, 3d; 3b, 3c) verbunden und in Strömungsrichtung (15) diagonal hintereinander angeordnet sind, wobei die Drehachsen (5a, 5c; 5b, 5d) der jeweils stromaufwärts (2a, 2c) und stromabwärts liegenden Tragflügel (2b, 2d) parallel angeordnet sind, zwei Rahmenkonstruktionen (4a, 4b), an deren Rahmenkonstruktionsarmen (3a, 3d; 3b, 3c) die Tragflügel (2a, 2d; 2b, 2c) drehbar gelagert und deren oszillierende Rotationsbewegungen um eine gemeinsame Drehachse (6) miteinander gekoppelt sind, eine Kraftübertragungseinrichtung (17) als Antrieb, welcher die unidirektionale Rotationsbewegung der Antriebswelle (19) in oszillierende Rotationsbewegungen der Rahmenkonstruktionen (4a, 4b) umwandelt, bzw. eine Kraftübertragungseinrichtung (17) zur Energiegewinnung, die die oszillierenden Rotationsbewegungen der beiden Rahmenkonstruktionen (4a, 4b) koppelt und in eine unidirektionale Rotationsbewegung zur Bereitstellung an die Abtriebswelle (19) umwandelt, eine Einrichtung (8) zur Befestigung in der Umgebung oder zur Verbindung der Strömungsmaschine (1, 16, 23) mit einem Schiff (25), einer schwimmenden oder einer im Wasser befindlichen Struktur, und eine Rahmenkonstruktionshalterung (13) aufweist.

2. Strömungsmaschine nach Anspruch 1, bei der für die Kraftübertragung die Rahmenkonstruktionen (4a, 4b) auf einer Achse (20) drehbar gelagert und alle vier Rahmenkonstruktionsarme (3a, 3b, 3c, 3d) mit jeweils einer Pleuelstange (12) verbunden sind, die jeweils mit Kurbelwellen (10, 11) verbunden sind, deren gegenläufige Rotationsbewegungen durch ein Getriebe zusammengeführt werden, welches mit mindestens einer Kraftübertragungseinrichtung (17) mit der Antriebs bzw. Abtriebswelle (19) in Verbindung steht, welche eine unidirektionale Rotationsbewegung ausführt.

3. Strömungsmaschine nach Anspruch 1, bei der für die Kraftübertragung in einem Antriebsmodus die Bewegungen der beiden Rahmenkonstruktionen (4a, 4b) gekoppelt werden, wobei die Antriebswelle (19) die Drehmomente auf die Rahmenkonstruktionen (4a, 4b) überträgt, um deren oszillierende Rotation zu bewirken, bzw. in einem Energiegewinnungsmodus die gegenläufigen oszillierenden Rotationsbewegungen der Rahmenkonstruktionsarme (4a, 4b) über ein Kegelradgetriebe miteinander gekoppelt werden, wobei die Drehmomentenübertragung auf die Abtriebswelle (19) über eine Getriebeanordnung erfolgt.

4. Strömungsmaschine nach Anspruch 3, deren Getriebeanordnung mindestens zwei in Reihe geschaltete Kraftübertragungseinrichtungen (17) umfasst, wobei die erste Kraftübertragungseinrichtung (17) die erste Rahmenkonstruktion (4a) und die zweite Kraftübertragungseinrichtung (17) die zweite Rahmenkonstruktion (4b) mit der Antriebs- bzw. Abtriebswelle (19) verbindet.

5. Strömungsmaschine nach Anspruch 2 oder 4, bei der die Verbindung der Kraftübertragungseinrichtung (17) mit der Antriebs- bzw. Abtriebswelle (19) über jeweils einen Freilauf erfolgt.

6. Strömungsmaschine nach Anspruch 2, 4 oder 5, deren Antriebs- bzw. Abtriebswelle (19) über einen Energiespeicher, z.B. ein Schwungrad, verfügt.

7. Strömungsmaschine nach Anspruch 1, die eine Kraftübertragungseinrichtung zu einem hydraulischen System aufweist, wobei die Rahmenkonstruktionen (4a, 4b) auf einer Achse (20) drehbar gelagert und alle vier Rahmenkonstruktionsarme (3a, 3b, 3c, 3d) mit jeweils einer Kolbenstange verbunden sind, die jeweils an einem in einem Zylinder befindlichen Kolben befestigt sind, und wobei im Antriebsmodus das mit Hilfe einer Pumpe verdichtete Fluid die Bewegung von in Zylindern befindlichen Kolben bewirkt, an denen die Kolbenstangen befestigt sind, bzw. im Energiegewinnungsmodus in dem jeweiligen Zylinder ein Fluid verdichtet und zu einer mit entsprechenden technischen Mitteln ausgestatteten Turbine gepumpt wird.

8. Strömungsmaschine zur Energiegewinnung nach einem der vorgenannten Ansprüche, die als Einrichtung zu ihrer Verankerung oder Befestigung mindestens eine Festmacherleine (8) aufweist, mittels der die Rahmenkonstruktionshalterung (13) der Strömungsmaschine an einer in der Umgebung vorhandenen Struktur verankerbar ist.

9. Strömungsmaschine zur Energiegewinnung nach Anspruch 8, bei der die Festmacherleine (8) über eine Winde (9), die ansteuerbar ist, mit der Rahmenkonstruktionshalterung (13) verbunden ist.

10. Strömungsmaschine zur Energiegewinnung nach Anspruch 8 oder 9, bei der mindestens ein Schwimmkörper mit der Rahmenkonstruktionshalterung (13) verbunden ist.

11. Strömungsmaschine nach einem der Ansprüche von 1 bis 7, die fest an einer schwimmenden Struktur, wie einem Mehrrumpfschiff (25), befestigbar ist.

12. Strömungsmaschine nach Anspruch 11, die durch eine Steuerung im Energiegewinnungs- und im Antriebsmodus betreibbar ist.

13. Strömungsmaschine nach Anspruch 11 oder 12, bei der durch eine Steuerung der Tragflügel (2a, 2b, 2c, 2d) Vorwärts- oder Rückwärtsschub erzeugbar ist.

14. Strömungsmaschine nach Anspruch 11, 12 oder 13, die in vertikaler Richtung verfahrbar an die schwimmende Struktur, z.B. ein Mehrrumpfschiff (25), anbringbar und bei Nichtnutzung oberhalb der Wasseroberfläche anordbar ist.

15. Strömungsmaschine nach einem der Ansprüche von 1 bis 7, die über eine Leine mit einer schwimmenden Struktur, z.B. einem Schiff, verbindbar und vor dem Schiff als Antrieb und hinter dem Schiff zur Energiegewinnung einsetzbar ist.

## Claims

1. A turbomachine for transmitting energy between a flowing fluid and a drive/output shaft (19), on which a motor or generator (14) is arranged and which can be utilized both as a propulsion system and for energy generation, **characterized in that** it comprises a first, a second, a third and a fourth oscillating aerofoil (2a, 2b, 2c, 2d) which perform oscillating thrusting movements about their transverse axis, wherein the axes of rotation (5a, 5d; 5b, 5c) of two aerofoils (2a, 2d; 2b, 2c) are respectively connected by two frame structure arms (3a, 3d; 3b, 3c) and are arranged diagonally one behind the other in the direction of flow (15), wherein the axes of rotation (5a, 5c; 5b, 5d) of the aerofoils respectively lying upstream (2a, 2c) and downstream (2b, 2d) are arranged so as to be parallel, two frame structures (4a, 4b) on the frame structure arms (3a, 3d; 3b, 3c) of which the aerofoils (2a, 2d; 2b, 2c) are rotatably mounted and their oscillating rotational movements are coupled to one another about a common axis of rotation (6), a power transmission device (17) as a drive which converts the unidirectional rotational movement of the drive shaft (19) into oscillating rotational movements of the frame structures (4a, 4b) and a same power transmission device (17) for energy generation which couples the oscillating rotational movements of the two frame structures (4a, 4b) and converts them into a unidirectional rotational movement to be provided to the output shaft (19), a device (8) for fixation in the environment or for connecting the turbomachine (1, 16, 23) to a vessel (25), to a floating structure or to a structure located in the water, and a frame structure mount (13).

2. The turbomachine according to claim 1, wherein for the power transmission the frame structures (4a, 4b) are rotatably mounted on an axle (20) and all four frame structure arms (3a, 3b, 3c, 3d) are connected to respective connecting rods (12), which are respectively connected to crankshafts (10, 11), the opposite rotational movements of which are joined by a gear unit, which is connected by at least one power transmission device (17) to the drive/output shaft (19), which performs a unidirectional rotational movement.

3. The turbomachine according to claim 1, wherein, for the power transmission in a drive mode, the movements of the two frame structures (4a, 4b) are coupled, wherein the drive shaft (19) transmits the torque to the frame structures (4a, 4b) so as to cause their oscillating rotation, and, for the power transmission in an energy-generation mode, the opposite oscillating rotational movements of the frame structure arms (4a, 4b) are coupled to each other via a bevel gear, wherein the transmission of the torque to the output shaft (19) occurs via a gear arrangement.

4. The turbomachine according to claim 3, the gear arrangement of which comprises at least two power transmission devices (17) connected in series, wherein the first power transmission device (17) connects the first frame structure (4a) and the second power transmission device (17) connects the second frame structure (4b) to the drive/output shaft (19) .

5. The turbomachine according to claim 2 or 4, wherein the connection of the power transmission device (17) to the drive/output shaft (19) respectively occurs via a one-way freewheel clutch.

6. The turbomachine according to claim 2, 4 or 5, the drive/output shaft (19) of which has an energy storage device such as a flywheel.

7. The turbomachine according to claim 1, comprising a power transmission device for a hydraulic system, wherein the frame structures (4a, 4b) are rotatably mounted on an axis (20) and all four frame structure arms (3a, 3b, 3c, 3d) are connected to respective piston rods, which are attached to respective pistons located in cylinders, and wherein, in the drive mode, the fluid compressed by means of a pump causes the movement of pistons located in cylinders, to which pistons the piston rods are attached, and, in the energy-generation mode, a fluid is compressed in the respective cylinders and pumped to a turbine equipped with corresponding technical means.

8. The turbomachine for energy generation according to one of the aforementioned claims, which comprises as a device for its anchoring or fixation at least one mooring line (8) by means of which the frame structure mount (13) of the turbomachine can be anchored to a structure present in the environment.

9. The turbomachine for energy generation according to claim 8, wherein the mooring line (8) is connected to the frame structure mount (13) via a controllable winch (9).

10. The turbomachine for energy generation according to claim 8 or 9, wherein at least one floating body is connected to the frame structure mount (13).

11. The turbomachine according to one of claims 1 to 7, which can be firmly secured to a floating structure such as a multihull vessel (25).

12. The turbomachine according to claim 11, which can be operated by control means in the energy-generation mode and in the drive mode.

13. The turbomachine according to claim 11 or 12, wherein forward or reverse thrust can be generated by controlling the aerofoils (2a, 2b, 2c, 2d).

14. The turbomachine according to claim 11, 12 or 13, which can be attached to the floating structure, e.g. a multihull vessel (25), so as to be movable vertically and which can be arranged above the water surface when not in use.

15. The turbomachine according to one of claims 1 to 7, which can be connected to a floating structure, e.g. to a vessel, via a line and which can be used in front of the vessel as a propulsion and behind the vessel for energy generation.

## Revendications

1. Turbomachine, destinée à transférer de l'énergie entre un fluide circulant et un arbre d'entraînement ou entraîné (19), sur laquelle est placé un moteur ou un générateur (14) et qui peut s'utiliser aussi bien en tant que système d'entraînement, que pour produire de l'énergie, **caractérisée en ce qu'**elle comporte une première, une deuxième, une troisième et une quatrième ailes portantes (2a, 2b, 2c, 2d) oscillantes, qui effectuent des mouvements de tangage oscillant autour de leur axe transversal, les axes de rotation (5a, 5d ; 5b, 5c) de chaque fois deux ailes portantes (2a, 2d; 2b, 2c) étant reliés par deux bras (3a, 3d ; 3b, 3c) de structure en cadre et placés en diagonale les uns derrière les autres dans la direction de circulation (15), les axes de rotation (5a, 5c ; 5b, 5d) des ailes portantes situées en amont (2a, 2c)et en aval (2b, 2d) étant placés en parallèle, deux structures en cadre (4a, 4b), sur les bras (3a, 3d; 3b, 3c) de structure en cadre desquelles les ailes portantes (2a, 2d; 2b, 2c) sont logées de manière rotative et dont les mouvements rotatoires oscillants sont couplés les uns aux autres autour d'un axe de rotation (6) commun, un dispositif de transmission des forces (17) faisant office d'entraînement, lequel transforme le déplacement rotatoire unidirectionnel de l'arbre d'entraînement (19) en mouvements rotatoires oscillants des structures en cadre (4a, 4b), ou un dispositif de transmission des forces (17), destiné à produire de l'énergie, qui couple les mouvements rotatoires oscillants des deux structures en cadre (4a, 4b) et les transforme en un déplacement rotatoire unidirectionnel, pour le mettre à disposition de l'arbre entraîné (19), un dispositif (8) de fixation dans l'environnement ou de liaison de la turbomachine (1, 16, 23) avec un navire (25), une structure flottante ou une structure se trouvant dans l'eau et un support (13) de structure en cadre.

2. Turbomachine selon la revendication 1, sur lequel pour la transmission des forces, les structures en cadre (4a, 4b) sont logées de manière rotative sur un axe (20) et tous les quatre bras (3a, 3b, 3c, 3d) de structure en cadre sont reliés chacun avec une bielle (12), qui sont respectivement reliées avec des vilebrequins (10, 11), dont les déplacements rotatoires à contresens sont réunis par une transmission, laquelle par au moins un dispositif de transmission des forces (17), lequel réalise un déplacement rotatoire unidirectionnel, se trouve en liaison avec l'arbre d'entraînement ou l'arbre entraîné (19).

3. Turbomachine selon la revendication 1, sur lequel pour la transmission des forces dans un mode d'entraînement, les déplacements des deux structures en cadre (4a, 4b) sont couplés, l'arbre d'entraînement (19) transmettant les couples de rotation sur les structures en cadre (4a, 4b), pour provoquer leur rotation oscillante, ou dans un mode de production d'énergie, les déplacements rotatoires oscillants à contresens des bras de structure en cadre (4a, 4b) étant couplés les uns aux autres par l'intermédiaire d'un réducteur à couple conique, la transmission du couple de rotation sur l'arbre entraîné (19) s'effectuant par l'intermédiaire d'un ensemble de transmission.

4. Turbomachine selon la revendication 3, dont l'ensemble de transmission comprend au moins deux dispositifs de transmission des forces (17) montés en série, le premier dispositif de transmission des forces (17) reliant la première structure en cadre (4a) et le deuxième dispositif de transmission des forces (17) reliant la deuxième structure en cadre (4b) avec l'arbre d'entraînement ou l'arbre entraîné (19).

5. Turbomachine selon la revendication 2 ou 4, sur lequel la liaison du dispositif de transmission des forces (17) avec l'arbre d'entraînement ou l'arbre entraîné (19) s'effectue respectivement par l'intermédiaire d'une roue libre.

6. Turbomachine selon la revendication 2, 4 ou 5, dont l'arbre d'entraînement ou l'arbre entraîné (19) dispose d'un accumulateur d'énergie, par exemple d'une roue d'inertie.

7. Turbomachine selon la revendication 1, qui comporte un dispositif de transmission des forces vers un système hydraulique, les structures en cadre (4a, 4b) étant logées de manière rotative sur un axe (20) et tous les quatre bras de structure en cadre (3a, 3b, 3c, 3d) étant reliés chacun avec une tige de piston, qui sont respectivement fixées sur un piston situé dans un cylindre, et en mode d'entraînement, le fluide compressé à l'aide d'une pompe provoquant le déplacement de pistons situés dans des cylindres sur lesquels sont fixées les tiges de piston, ou en mode de production d'énergie, dans le cylindre en question, un fluide étant compressé et pompé vers une turbine dotée de moyens techniques correspondants.

8. Turbomachine, destinée à produire de l'énergie selon l'une quelconque des revendications précédentes, qui comporte en tant que dispositif pour son ancrage ou sa fixation au moins une ligne d'amarrage (8), au moyen de laquelle le support (13) de structure en cadre de la turbomachine peut s'ancrer sur une structure présente dans l'environnement.

9. Turbomachine, destinée à produire de l'énergie selon la revendication 8, sur laquelle la ligne d'amarrage (8) est reliée avec le support (13) de structure en cadre par l'intermédiaire d'un treuil (9), qui peut être commandé.

10. Turbomachine, destinée à produire de l'énergie selon la revendication 8 ou 9, sur laquelle au moins un corps flottant est relié avec le support (13) de structure en cadre.

11. Turbomachine selon l'une quelconque des revendications de 1 à 7, qui peut se fixer solidement sur une structure flottante, comme un navire multicoques (25).

12. Turbomachine selon la revendication 11, qui par un système de commande est actionnable en mode de production d'énergie ou en mode d'entraînement.

13. Turbomachine selon la revendication 11 ou 12, sur lequel par une commande des ailes portantes (2a, 2b, 2c, 2d), la poussée vers l'avant ou vers l'arrière peut être générée.

14. Turbomachine selon la revendication 11, 12 ou 13, qui peut se monter en étant déplaçable dans la direction verticale sur la structure flottante, par exemple un navire multicoques (25), et lorsqu'elle n'est pas utilisée, peut se placer au-dessus du niveau de l'eau.

15. Turbomachine selon l'une quelconque des revendications de 1 à 7, qui par l'intermédiaire d'une ligne peut se relier avec une structure flottante, par exemple un navire et qui peut s'utiliser à l'avant du navire en tant qu'entraînement ou à l'arrière du navire pour produire de l'énergie.
